# EUROPÄISCHE PATENTSCHRIFT

(11) **EP 4 286 138 B1**
(45) Veröffentlichungstag und Bekanntmachung des Hinweises auf die Patenterteilung: **12.03.2025**
(21) Anmeldenummer: 23172853.6
(22) Anmeldetag: 11.05.2023
(51) Int. Cl.: B29C 55/02

(54) **RECKANLAGE SOWIE VERFAHREN ZUR VERRINGERUNG UNGLEICHMÄSSIGER TEMPERATUREN UND LUFTSTRÖMUNGEN IN EINER FOLIENRECKANLAGE**
STRETCH FORMING APPARATUS AND METHOD FOR REDUCING NON-UNIFORM TEMPERATURES AND AIRFLOWS IN A FILM STRETCHING APPARATUS
INSTALLATION D'ÉTIRAGE ET PROCÉDÉ DE RÉDUCTION DE TEMPÉRATURES NON UNIFORMES ET D'ÉCOULEMENT D'AIR DANS UNE INSTALLATION D'ÉTIRAGE DE FILM

(30) Priorität: 30.05.2022 DE 102022113534
(43) Veröffentlichungstag der Anmeldung: 06.12.2023
(73) Patentinhaber: Brückner Maschinenbau GmbH, 83313 Siegsdorf (DE)
(72) Erfinder: HÄUSL, Tobias, 83278 Traunstein (DE)
(74) Vertreter: Flach Bauer & Partner Patentanwälte mbB

(56) Entgegenhaltungen:
- EP-A1- 3 398 750
- JP-A- 2002 018 970
- US-A1- 2009 220 905

## Beschreibung

Die Erfindung betrifft eine Reckanlage zum Recken einer Folie sowie ein Verfahren zur Verringerung ungleichmäßiger Temperaturen und Luftströmungen in einer Folienreckanlage.

Reckanlagen finden insbesondere bei der Herstellung von Kunststofffolien Anwendung. Üblicherweise wird in solchen Anlagen die zu reckende Folie mittels eines Transportsystems in einer Abzugsrichtung durch einen Ofen der Anlage bewegt. Im Ofen wird die zu reckende Folie vor dem Reckvorgang erwärmt und auch beim und während des Reckvorgangs auf einer vorbestimmten Temperatur gehalten. Anschließend wird im Ofen die gereckte Folie gekühlt.

Während des gesamten Vorgangs ist es notwendig, die Temperatur der Folie in Querrichtung, d. h. quer zur Abzugsrichtung, homogen zu halten. Ansonsten laufen Prozesse in der zu reckenden Folie in Querrichtung zu unterschiedlichen Zeitpunkten ab, wodurch Foliendefekte und ungleichmäßige Folieneigenschaften hervorgerufen werden. Eine ungleichmäßige Temperierung in Querrichtung wird beispielsweise durch unerwünschte Luftströmungen in Abzugsrichtung hervorgerufen, durch die kalte Luft ungleichmäßig in den Ofen einströmt.

Die EP 3 398 750 A1 offenbart eine Vorrichtung zur Steuerung einer Luftströmung an einem Ofen zur Herstellung von gereckten Folien. Die Vorrichtung ist außerhalb des Ofens am Ein- oder Ausgang des Ofens angebracht.

Es ist daher Aufgabe der Erfindung, eine Reckanlage sowie ein Verfahren bereitzustellen, bei dem ungleichmäßige Temperaturen der Folie in ihrer Querrichtung verringert werden.

Die Aufgabe wird gelöst durch eine Reckanlage zum Recken einer Folie, insbesondere eine Quer-, Längs- und/oder Simultan-Reckanlage, mit einem Ofen und einer Ausgleichsvorrichtung. Der Ofen weist eine Hochrichtung, eine Querrichtung und eine Abzugsrichtung auf. Die Ausgleichsvorrichtung weist einen Luftförderer, eine erste Ausgleichsöffnung und eine zweite Ausgleichsöffnung auf, wobei die erste Ausgleichsöffnung und die zweite Ausgleichsöffnung auf entgegengesetzten Seiten einer Mittelebene des Ofens in Hoch- und Abzugsrichtung in den Ofen münden. Der Luftförderer ist strömungstechnisch zwischen der ersten Ausgleichsöffnung und der zweiten Ausgleichsöffnung angeordnet, wobei die Ausgleichsvorrichtung dazu ausgebildet ist, eine Menge an Luft durch eine der Ausgleichsöffnungen aus dem Ofen zu entnehmen und die entnommene Menge an Luft dem Ofen durch die andere der Ausgleichsöffnungen wieder zuzuführen.

Mittels der Ausgleichsvorrichtung ist es möglich, auf verschiedenen Seiten der Folie in Querrichtung Luftströmungen zu erzeugen, die zu den unerwünschten Luftströmungen gegenläufig sind und diese somit zum Erliegen bringen. Gleichzeitig wird die Temperatur oder Luftbilanz im Ofen nicht verändert, da die auf der eine Seite der Mittelebene entnommene Luftmenge auf der anderen Seite dem Ofen gleichermaßen wieder zugeführt wird.

Die Ausgleichsvorrichtung kann frei von Temperiereinrichtungen für die geförderte Luft sein.

Denkbar ist jedoch auch, dass in der Ausgleichsvorrichtung eine Temperiereinrichtung, wie ein Wärmetauscher vorhanden ist. Dies kann hilfreich sein, um gezielt Temperaturunterschieden im Ofen entgegenzuwirken und/oder um Wärmeverluste auszugleichen, die in der Ausgleichsvorrichtung auftreten.

Insbesondere ist die Ausgleichsvorrichtung ein geschlossenes System.

Die Ausgleichsöffnungen erstrecken sich beispielsweise nicht über Mittelebene des Ofens.

Um die Gleichförmigkeit der Luftströmung weiter zu erhöhen, können die erste Ausgleichsöffnung und die zweite Ausgleichsöffnung gleich ausgebildet sein, wobei dies keine Voraussetzung ist.

In einem Aspekt sind die erste Ausgleichsöffnung und die zweite Ausgleichsöffnung im Wesentlichen an gleicher Position in Abzugsrichtung angeordnet, damit die Ausgleichvorrichtung nicht selbst Luftströmungen in Längsrichtung erzeugt.

In einer Ausführungsform sind die erste Ausgleichsöffnung und die zweite Ausgleichsöffnung im Bereich eines Folieneinlaufs in den Ofen oder im Bereich eines Folienauslaufs aus dem Ofen angeordnet, wodurch der Eintrag von zu kalter oder zu warmer Luft aus der Umgebung der Reckanlage vermieden wird.

Beispielsweise sind die erste Ausgleichsöffnung und die zweite Ausgleichsöffnung in einer Neutralzone des Ofens, einer Zone vor einer Neutralzone und/oder einer Zone nach einer Neutralzone angeordnet. Die Neutralzone befindet sich zwischen zwei Zonen des Ofens mit deutlich unterschiedlichen Temperaturen, beispielsweise einer Annealingzone und einer Kühlzone. Somit werden Luftströmungen entlang großer Temperaturgradienten unterbunden, wodurch die Reckanlage effizienter wird.

In einem Aspekt ist im Ofen eine Folienlaufbahn definiert, insbesondere wobei die erste Ausgleichsöffnung und die zweite Ausgleichsöffnung bezüglich der Querrichtung außerhalb der Folienlaufbahn angeordnet sind und/oder bezüglich der Hochrichtung auf Höhe der Folienlaufbahn angeordnet sind. Auf diese Weise wird die Folie nicht durch die von der Ausgleichsvorrichtung geförderte Luft beeinträchtigt.

Um zu verhindern, dass die Folie direkt angeblasen wird, können die erste Ausgleichsöffnung und die zweite Ausgleichsöffnung jeweils zwei Strömungsöffnungen aufweisen, wobei jeweils eine der beiden Strömungsöffnungen oberhalb und die andere der beiden Strömungsöffnungen unterhalb der Folienlaufbahn angeordnet ist.

Beispielsweise weisen die erste Ausgleichsöffnung und die zweite Ausgleichsöffnung jeweils eine Vielzahl an Strömungsöffnungen in wenigstens einem Strömungsbereich auf, wobei sich der Strömungsbereich in Hochrichtung erstreckt, insbesondere von unterhalb der Folienlaufbahn bis oberhalb der Folienlaufbahn, oder wobei sich der Strömungsbereich in Querrichtung oberhalb oder unterhalb der Folienlaufbahn erstreckt. Durch die Vielzahl an Strömungsöffnungen wird eine Wechselwirkung mit der Folie verhindert, da die Luft nicht nur punktuell, sondern über eine größere Fläche dem Ofen entnommen bzw. zugeführt wird.

Denkbar ist auch, dass mehrere Strömungsbereiche möglich sind.

Um Verunreinigungen des Behandlungsraums zu vermeiden, kann der Luftförderer außerhalb des Behandlungsraums angeordnet sein.

Auch ist es denkbar, dass ein Filter in der Ausgleichvorrichtung, insbesondere einer Rohrleitung der Ausgleichsvorrichtung vorgesehen ist. Dadurch kann die Reinheit der Luft im Ofen verbessert werden, wodurch auch die Qualität der erzeugten Folie gesteigert wird.

Der Luftförderer kann ein Radialventilator sein, um die Ausgleichsvorrichtung effizient zu gestalten.

Zum Beispiel ist die erste Ausgleichsöffnung durch eine erste Rohrleitung und die zweite Ausgleichsöffnung durch eine zweite Rohrleitung strömungstechnisch mit dem Luftförderer verbunden, um definierte Strömungswege zu erhalten.

Die Rohrleitungen sind insbesondere isoliert, damit keine Wärmeverluste durch die Ausgleichsvorrichtung auftreten, die zu Temperaturunterschieden im Ofen führen würden.

In einer Ausführungsform weist die Ausgleichsvorrichtung einen ersten Klappkasten, der mit der Druckseite des Luftförderers strömungstechnisch verbunden ist, und einen zweiten Klappkasten auf, der mit der Saugseite des Luftförderers strömungstechnisch verbunden ist, wobei sich die erste Rohrleitung und die zweite Rohrleitung jeweils in zwei Zweige verzweigen und je ein Zweig mit dem ersten Klappkasten und der jeweils andere Zweig mit dem zweiten Klappkasten strömungstechnisch verbunden ist. Auf diese Weise kann der Luftstrom gesteuert werden.

Die Klappkästen sind beispielsweise 2-Wege-Verteiler.

Beispielsweise ist in einer ersten Stellung der Klappkästen die erste Rohrleitung strömungstechnisch mit der Saugseite des Luftförderers verbunden und die zweite Rohrleitung ist strömungstechnisch mit der Druckseite des Luftförderers verbunden, und in einer zweiten Stellung der Klappkästen ist die erste Rohrleitung strömungstechnisch mit der Druckseite des Luftförderers verbunden und die zweite Rohrleitung ist strömungstechnisch mit der Saugseite des Luftförderers verbunden. Somit lässt sich der Luftstrom innerhalb der Ausgleichsvorrichtung umkehren.

Bei einer automatischen Regelung der Ausgleichsvorrichtung kann die Reckanlage einen oder mehrere Sensoren für die Richtung einer Luftströmung und/oder einen bzw. mehrere Drucksensoren aufweisen.

In einer Ausführungsform weist die Reckanlage ein Transportsystem auf, das dazu ausgebildet ist, die Folie durch den Ofen in Abzugsrichtung zu transportieren, insbesondere entlang der Folienlaufbahn, wodurch eine hohe Prozesssicherheit erreicht wird.

Derartige Transportsysteme sind bekannt, beispielsweise aus der WO2014/094803.

Die Ausgleichsöffnungen können außerhalb des Transportsystems in Querrichtung und/oder neben dem Transportsystem vorgesehen sein.

Die Aufgabe wird ferner gelöst durch ein Verfahren zur Verringerung ungleichmäßiger Temperaturen und Luftströmungen in einer Reckanlage, mit den folgenden Schritten:
- Messen der Größe der Luftströmung in Abzugsrichtung und/oder des Drucks auf einer Seite der Mittelebene des Ofens der Reckanlage, und
- Entnehmen, mittels einer Ausgleichsvorrichtung, einer Menge an Luft durch eine erste Ausgleichsöffnung auf einer Seite der Mittelebene des Ofens aus dem Ofen und Zuführen der entnommenen Menge an Luft auf der anderen Seite der Mittelebene zu dem Ofen durch eine zweite Ausgleichsöffnung in Abhängigkeit des Ergebnisses der Messung.

Das Messen der Größe der Luftströmung kann automatisiert mittels Sensoren aber auch manuell erfolgen, **z.B.** mittels eines manuellen Strömungsmessgerätes.

Die zur Reckanlage diskutierten Merkmale und Vorteile gelten gleichermaßen für das Verfahren und umgekehrt.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 äußerst schematisch eine erfindungsgemäße Reckanlage in Draufsicht,
- Figur 2 einen schematischen Schnitt durch die Reckanlage gemäß Figur 1 entlang Linie II-II,
- Figur 3 eine perspektivische Ansicht eines Teils einer Ausgleichsvorrichtung der Reckanlage gemäß Figur 1,
- Figur 4 einen schematischen, verkürzten Schnitt durch die Reckanlage gemäß Figur 1,
- die Figuren 5, 6 und 7 eine zweite, dritte bzw. vierte Ausführungsform einer erfindungsgemäßen Reckanlage im verkürzten Schnitt,
- Figur 8 eine fünfte Ausführungsform einer erfindungsgemäßen Reckanlage im verkürzten Schnitt, und
- Figur 9 eine vergrößerte Schnittansicht der Figur 8 entlang der Linie A-A.

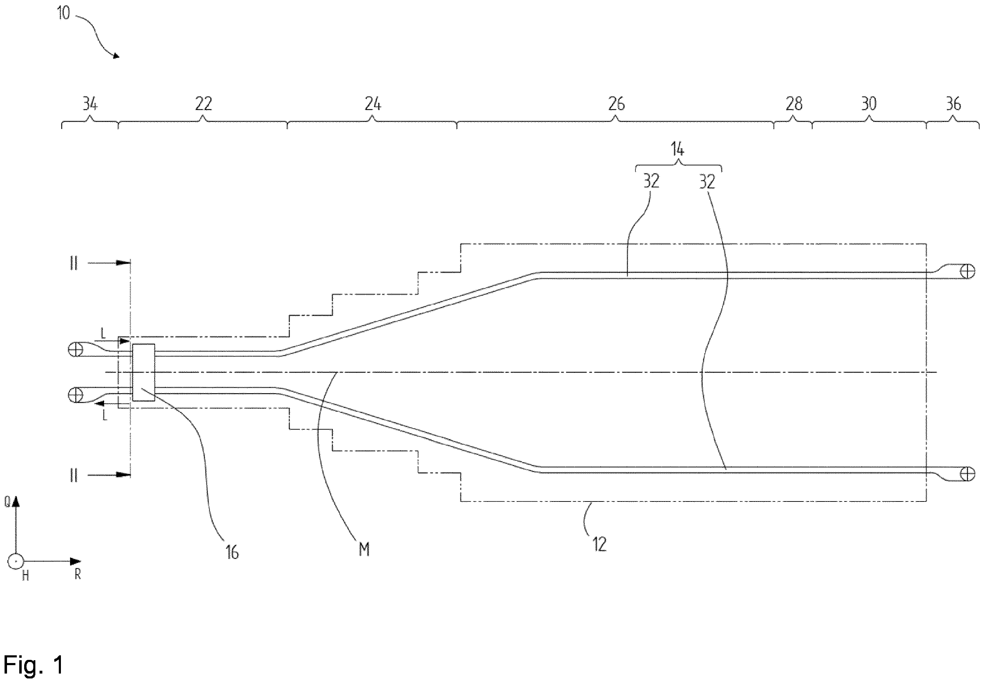

In Figur 1 ist äußerst schematisch eine Reckanlage 10 gemäß der Erfindung dargestellt.

Im gezeigten ersten Ausführungsbeispiel ist die Reckanlage eine Querreckanlage, auch TDO ("Transverse Direction Orienter") genannt. Denkbar ist auch, dass die Reckanlage eine Längs- oder Simultanreckanlage ist.

Die Reckanlage 10 weist einen Ofen 12, ein Transportsystem 14 sowie eine Ausgleichsvorrichtung 16 auf.

Der Ofen 12 hat eine Abzugsrichtung R, die der Bewegungsrichtung der zu reckenden Folie entspricht. Quer zur Abzugsrichtung R und horizontal verläuft die Querrichtung Q des Ofens 12 und vertikal die Hochrichtung H.

Der Ofen 12 hat entlang der Abzugsrichtung R verschiedene Zonen zur Behandlung der zu reckenden Folie.

In der ersten Zone 22, auch Vorheizzone genannt, wird die Folie erwärmt. In der anschließenden zweiten Zone 24 ("Reckzone") wird die Folie in Querrichtung Q gereckt, sodass sie zum Ende der zweiten Zone 24 eine größere Breite aufweist als zu Beginn.

Nach erfolgter Reckung durchläuft die Folie dann die dritte Zone 26 ("Wärmebehandlungszone", "Weiterheizzone" und/oder "Annealingzone" genannt), bei der eine Relaxierung der Folie bei hohen Temperaturen erfolgen kann.

Anschließend verläuft die Folie durch eine vierte Zone 28 und eine fünfte Zone 30 ("Kühlzone"), wobei die Folie in der fünften Zone 30 abgekühlt wird.

Die vierte Zone 28 wird Neutralzone genannt und dient zur Trennung der dritten Zone 26 und der fünften Zone 30. Die Neutralzone ist beispielsweise ein leerer Raum ohne Belüftung.

Das Transportsystem 14 umfasst, in an sich bekannter Weise, zwei Transportschienen 32, die gegenüber einer Mittelebene M der Reckanlage 10 bzw. des Ofens 12 spiegelsymmetrisch angeordnet sind und die sich zumindest teilweise im Ofen 12 erstrecken.

In einer Einlaufzone 34 sowie einer Auslaufzone 36, in denen die zu reckende Folie der Reckanlage 10 zu- bzw. abgeführt wird, verlaufen die Transportschienen 32 außerhalb des Ofens 12.

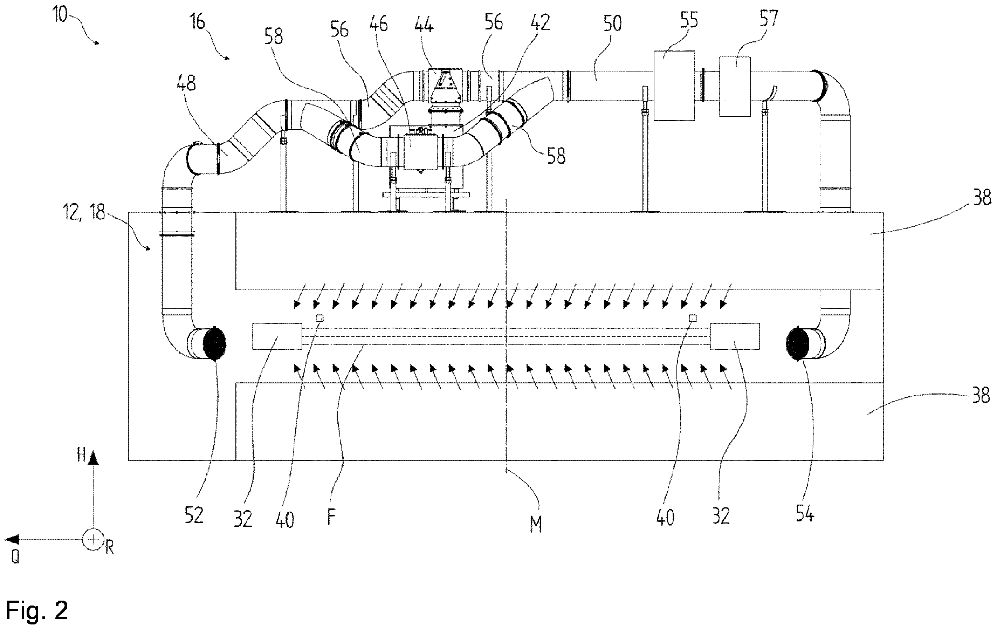

Die Folie wird in an sich bekannter Weise durch Kluppen (nicht dargestellt) des Transportsystems 14, die entlang der Transportschienen 32 geführt werden, gegriffen und in Abzugsrichtung R durch den Ofen 12 transportiert. Die Folie verläuft dabei in einer Folienlaufbahn F (Fig. 2) die im Ofen 12 durch das Transportsystem 14 definiert ist. Die Folienlaufbahn F schneidet die Mittelebene M.

Figur 2 zeigt einen Schnitt durch die Reckanlage 10 entlang der Linie II-II.

Im Ofen 12 sind die Transportschienen 32 dargestellt, wobei die Folienlaufbahn F durch eine strichpunktierte Linie und die Folie mittels einer gestrichelten Linie angedeutet sind.

Zudem sind mehrere Düsenkästen 38 des Ofens 12 dargestellt, die heiße Luft in Richtung der Folienbahn F fördern, wie mittels der Pfeile angedeutet ist. Mittels der heißen Luft wird die Folie erwärmt oder auf einer vorbestimmten Temperatur gehalten.

Im Bereich der Folienlaufbahn F oder der Transportschienen 32 sind optional wenigstens zwei Sensoren 40 vorgesehen, jeweils einer auf jeder Seite der Mittelebene M. Die Sensoren 40 sind dazu ausgebildet, die Richtung einer Luftströmung zu messen und/oder den am Sensor 40 vorherrschenden Luftdruck. Anstelle der Sensoren 40 kann die Richtung der Luftströmung auch manuell bestimmt werden, z.B. mittels eines manuellen Strömungsmessgerätes, das an der Messstelle positioniert wird.

Die Ausgleichsvorrichtung 16 weist einen Luftförderer 42, einen ersten Klappkasten 44, einen zweiten Klappkasten 46, eine erste Rohrleitung 48, eine zweite Rohrleitung 50, eine erste Ausgleichsöffnung 52 und eine zweite Ausgleichsöffnung 54 auf.

Der Luftförderer 42, die Klappkästen 44, 46 und Teile der Rohrleitungen 48, 50 sind außerhalb des Ofens 12 vorgesehen. Beispielsweise sind sie oben auf einem Gehäuse des Ofens 12 montiert.

Die Rohrleitungen 48, 50 erstrecken sich in den Ofen 12 hinein, und die Ausgleichsöffnungen 52, 54 sind schließlich innerhalb des Ofens 12 vorgesehen.

Die Ausgleichsöffnungen 52, 54 sind dabei auf verschiedenen Seiten der Mittelebene M im Ofen 12 angeordnet. Insbesondere befinden sich die Ausgleichsöffnungen 52, 54 in Bezug auf die Querrichtung Q außerhalb der Folienlaufbahn F und außerhalb des Transportsystems 14. In anderen Worten sind die Ausgleichsöffnungen 52, 54 neben dem Transportsystem 14 vorgesehen.

In Abzugsrichtung R sind die Ausgleichsöffnungen 52, 54 an im Wesentlichen gleicher Position angeordnet. Dies bedeutet beispielsweise, dass der Versatz der Ausgleichsöffnungen 52, 54 zueinander in Abzugsrichtung R weniger als 2 m, insbesondere weniger als 1 m beträgt.

Beispielsweise sind die Ausgleichsöffnungen 52, 54 innerhalb derselben Zone 22, 24, 26, 28, 30 oder zwischen den Zonen angeordnet.

Im gezeigten Ausführungsbeispiel sind die Ausgleichsöffnungen 52, 54 im Bereich eines Folieneinlaufs vorgesehen, d. h. in dem Bereich innerhalb des Ofens 12, der direkt an die Einlaufzone 34 anschließt. Im Beispiel gemäß Figur 1 befinden sich die Ausgleichsöffnungen 52, 54 in der ersten Zone 22.

Denkbar ist ebenfalls, dass die Ausgleichsöffnungen 52, 54 im Bereich eines Folienauslaufs, d.h. innerhalb des Ofen angrenzend an die Auslaufzone 36 vorgesehen sind. Ebenfalls können die Ausgleichsöffnungen 52, 54 in der vierten Zone 28, also der Neutralzone angeordnet sein. Denkbar ist auch, dass die Ausgleichsöffnungen 52, 54 in der dritten Zone 26 ("Wärmebehandlungszone") oder in der fünften Zone 30 ("Kühlzone") angeordnet sind. Entsprechend sind die Sensoren 40, falls vorhanden, in Abzugsrichtung R zu versetzen.

Es können auch mehrere Ausgleichsvorrichtungen 16 in verschiedenen Zonen vorgesehen sein.

Wie in Figur 2 zu sehen, ist die erste Ausgleichsöffnung 52 mittels der ersten Rohrleitung 48 strömungstechnisch mit dem Luftförderer 42 verbunden. In gleicher Weise ist die zweite Ausgleichsöffnung 54 mit mittels der zweiten Rohrleitung 50 mit dem Luftförderer 42 verbunden, sodass der Luftförderer 42 strömungstechnisch zwischen den beiden Ausgleichsöffnungen 52, 54 angeordnet ist, um Luft von einer der Ausgleichsöffnungen 52, 54 zu der anderen der Ausgleichsöffnungen 54, 52 zu fördern.

Die Ausgleichsvorrichtung 16 ist dabei ein geschlossenes System, sodass die Menge an Luft, die an einer der Ausgleichsöffnungen 52, 54 dem Ofen 12 entnommen wird, an der anderen Ausgleichsöffnung 54, 52 dem Ofen 12 zugeführt wird.

Im gezeigten Ausführungsbeispiel ist die Ausgleichsvorrichtung 16 ohne Temperiereinrichtungen, wie einer Heizung oder einer Kühlung ausgebildet. Die Rohrleitungen 48, 50 sind jedoch außerhalb des Ofens 12 isoliert, um keine Temperaturschwankungen zwischen den Ausgleichsöffnungen 52, 54 zu erzeugen.

In einer alternativen Ausführungsform kann in einer oder beiden der Rohrleitungen 48, 50 eine Temperiereinrichtung 55 angeordnet sein, beispielsweise ein Wärmetauscher.

Denkbar ist auch, dass ein bzw. mehrere Filter 57 in einer oder beiden der Rohrleitungen 48, 50 vorgesehen sind, die die durch die Ausgleichvorrichtung 16 strömende Luft filtern.

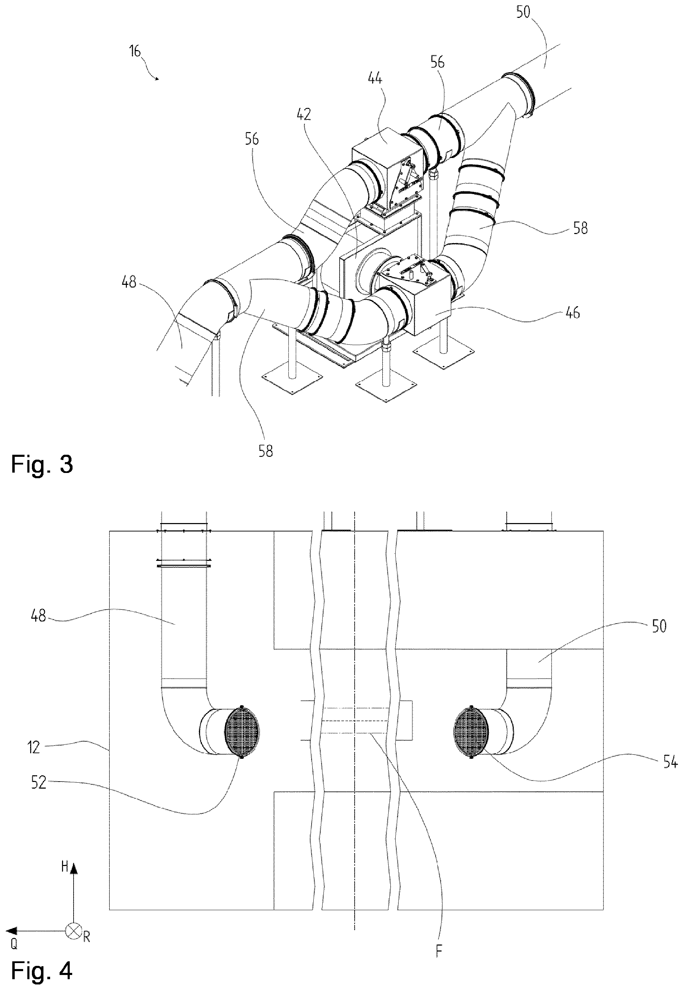

Figur 3 zeigt den Abschnitt der Ausgleichsvorrichtung 16 um den Luftförderer 42 herum in perspektivischer und vergrößerter Ansicht.

Der Luftförderer 42 ist im gezeigten Ausführungsbeispiel ein Radialventilator und weist somit eine Druckseite und eine Saugseite auf.

Der erste Klappkasten 44 ist direkt an die Druckseite des Luftförderers 42 angeschlossen, d. h. strömungstechnisch verbunden. In gleicher Weise ist der zweite Klappkasten 46 mit der Saugseite des Luftförderers 42 strömungstechnisch verbunden.

Die Klappkästen 44, 46 sind beispielsweise 2-Wege-Verteiler und beide jeweils sowohl mit der ersten Rohrleitung 48 als auch mit der zweiten Rohrleitung 50 strömungstechnisch verbunden.

Hierzu verzweigen sich die Rohrleitungen 48, 50 in jeweils zwei Zweige 56, 58, wobei jeweils der erste Zweig 56, d. h. der erste Zweig 56 der ersten Rohrleitung 48 und der erste Zweig 56 der zweiten Rohrleitung 50, mit dem ersten Klappkasten 44 strömungstechnisch verbunden ist. In gleicher Weise sind die zweiten Zweige 58 der Rohrleitungen 48, 50 jeweils mit dem zweiten Klappkasten 46 strömungstechnisch verbunden.

Die Klappkästen 44, 46 können zwei Stellungen einnehmen, wobei in der ersten Stellung die Klappkästen 44, 46 so geschaltet sind, dass der erste Klappkasten 44 die zweite Rohrleitung 50 strömungstechnisch mit der Druckseite des Luftförderers 42 verbindet und der zweite Klappkasten 46 die erste Rohrleitung 48 strömungstechnisch mit der Saugseite des Luftförderers verbindet.

In dieser ersten Stellung wird an der ersten Ausgleichsöffnung 52 dem Ofen 12 Luft entnommen und an der zweiten Ausgleichsöffnung 54 wieder dem Ofen 12 zugeführt. Die erste Ausgleichsöffnung 52 ist in diesem Falle ein Luftauslass und die zweite Ausgleichsöffnung 54 ein Lufteinlass für den Ofen 12.

In der zweiten Stellung der Klappkästen 44, 46 verbindet der erste Klappkasten 44 die erste Rohrleitung 48 strömungstechnisch mit der Druckseite des Luftförderers 42 und der zweite Klappkasten 46 verbindet die zweite Rohrleitung 50 mit der Saugseite des Luftförderers 42. In dieser Stellung bildet die zweite Ausgleichsöffnung 54 den Luftauslass und die erste Ausgleichsöffnung 52 den Lufteinlass für den Ofen 12. Die Strömungsrichtung der Luft ist in der zweiten Stellung gegenüber der ersten Stellung der Klappkästen 44, 46 somit umgekehrt.

Figur 4 illustriert nochmals die Lage der Ausgleichsöffnungen 52, 54 gegenüber der strichpunktiert eingezeichneten Folienlaufbahn F in schematisierter Form.

In dem ersten Ausführungsbeispiel liegen die Ausgleichsöffnungen 52, 54 in Querrichtung neben dem Transportsystem 14 und der Folienlaufbahn F. In Hochrichtung H befinden sich die Ausgleichsöffnungen 52, 54 auf Höhe der Folienlaufbahn F.

Die Ausgleichsöffnungen erstrecken sich insbesondere nicht über die Mittelebene M hinaus.

Außerdem sind die erste Ausgleichsöffnung 52 und die zweite Ausgleichsöffnung 54 gleich ausgebildet.

Beim Betrieb von üblichen Reckanlagen 10 bilden sich unerwünschte Luftströmungen in Abzugsrichtung R aus, die auf den verschiedenen Seiten der Mittelebene M gegenläufig sind, wie durch die mit L bezeichneten Pfeile in Figur 1 angedeutet ist. Um diese unerwünschten Luftströmungen L zu reduzieren, wird das folgende, erfindungsgemäße Verfahren durchgeführt.

Zunächst wird die Größe der Luftströmungen L in Abzugsrichtung R gemessen. Dies kann mittels der Sensoren 40 geschehen. Anstelle der Sensoren 40 kann die Richtung und Größe der Luftströmung auch manuell bestimmt werden, z.B. mittels eines Fadens, der an der Messstelle positioniert wird.

Denkbar ist auch, dass der Druck, beispielsweise der Druckunterschied, auf beiden Seiten der Mittelebene M bestimmt wird.

Im in Figur 1 illustrierten Fall existiert vor der Inbetriebnahme der Ausgleichsvorrichtung 16 auf der in Bezug auf Figur 1 oberen Seite der Mittelebene M (linke Seite in Bezug auf Figur 2) eine Luftströmung L in den Ofen 12 hinein und auf der anderen Seite der Mittelebene M (Fig. 1 untere Seite; Fig. 2 rechte Seite) eine Luftströmung aus dem Ofen 12 hinaus.

Nach einer Messung der Luftströmungen L, die auch händisch erfolgen kann, wird nun die Ausgleichsvorrichtung 16 in Betrieb genommen. Hierzu wird zunächst die Stellung der Klappkästen 44, 46 so gewählt, dass dem Ofen 12 Luft durch die Ausgleichsvorrichtung 16 an derjenigen der Ausgleichsöffnungen 52, 54 zugeführt wird, die auf der Seite der Mittelebene M angeordnet ist, auf der die unerwünschte Luftströmung L in dem Ofen 12 hineinführt. Diese Ausgleichsöffnung ist dann also ein Lufteinlass für den Ofen 12.

Im gezeigten Ausführungsbeispiel ist dies die erste Ausgleichsöffnung 52, sodass die Klappkästen 44, 46 somit in die zweite Stellung gebracht werden.

Anschließend wird der Luftförderer 42 in Betrieb genommen, wodurch durch die zweite Ausgleichsöffnung 54 Luft aus dem Ofen 12 entnommen wird, die in gleicher Menge an der ersten Ausgleichsöffnung 52 dem Ofen 12 wieder zugeführt wird.

Auf diese Weise entsteht eine Gegenströmung zur Luftströmungen L, die die unerwünschte Luftströmung L abschwächt.

Die Drehzahl des Luftförderers 42 wird dabei so lange erhöht, bis die unerwünschte Luftströmung L ein Minimum annimmt oder vollständig zum Erliegen kommt. Die Drehzahl kann dabei automatisch geregelt oder manuell angepasst werden.

Beispielsweise werden durch den Luftförderer 42 bis zu 4000 m³ Luft pro Stunde gefördert, insbesondere m³/h.

Somit wird durch die Ausgleichsvorrichtung 16 eine unerwünschte Luftströmungen L minimiert oder ganz verhindert, die zu Temperaturdifferenzen der Folie in Querrichtung Q führen würde.

Temperaturdifferenzen und Luftströmungen, die die Qualität der hergestellten Folie verringern können, werden daher zuverlässig vermieden, wodurch die Qualität der produzierten Folie verbessert wird.

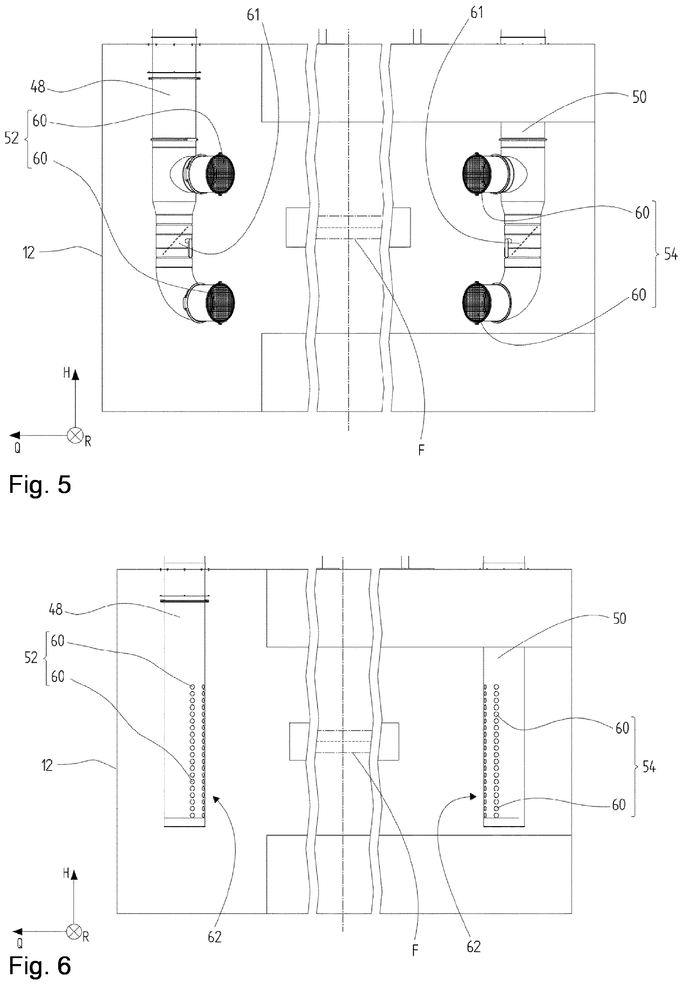

Die Figuren 5, 6, 7 und 8 entsprechen in der Darstellung der Figur 4. Sie zeigen weitere Ausführungsformen einer erfindungsgemäßen Reckanlage 10, die im Wesentlichen der ersten Ausführungsform entspricht. Daher wird im Folgenden lediglich auf die Unterschiede eingegangen und gleiche und funktionsgleiche Teile sind mit denselben Bezugszeichen versehen.

In der zweiten Ausführungsform gemäß Figur 5 weisen die erste Ausgleichsöffnung 52 und die zweite Ausgleichsöffnung 54 jeweils zwei Strömungsöffnungen 60 auf.

Die Strömungsöffnungen 60 der ersten Ausgleichsöffnung 52 sind somit mit der ersten Rohrleitung strömungstechnisch verbunden, und die Strömungsöffnungen 60 der zweiten Ausgleichsöffnung 54 mit der zweiten Rohrleitung 50.

In Querrichtung Q sind die Strömungsöffnungen 60 wie in der ersten Ausführungsform neben, d. h. außerhalb, der Folienlaufbahn F angeordnet.

In Hochrichtung H sind die Strömungsöffnungen 60 jedoch oberhalb bzw. unterhalb der Folienlaufbahn F angeordnet. Genauer gesagt ist eine der Strömungsöffnungen 60 der ersten Ausgleichsöffnung 52 und eine der Strömungsöffnungen 60 der zweiten Ausgleichsöffnung 54 oberhalb der Folienlaufbahn F, und die andere der Strömungsöffnungen 60 der ersten Ausgleichsöffnung 52 und die andere der Strömungsöffnungen 60 der zweiten Ausgleichsöffnung 54 unterhalb der Folienlaufbahn F angeordnet. Auf diese Weise wird die Folie nicht direkt mit Luft aus der Ausgleichvorrichtung angeblasen.

Zwischen den beiden Strömungsbereichen 60 jeder Ausgleichsöffnung kann jeweils eine Drosselklappe 61 (in Figur 5 gestrichelt angedeutet) vorgesehen sein. Mittels der Drosselklappen 61 kann die Menge der Luftentnahme bzw. der -zufuhr oberhalb und unterhalb der Folienlaufbahn F eingestellt werden.

In Figur 6 ist eine dritte Ausführungsform der Reckanlage 10 dargestellt, wobei die erste Ausgleichsöffnung 52 und die zweite Ausgleichsöffnung 54 jeweils eine Vielzahl an Strömungsöffnungen 60 aufweisen, die innerhalb eines Strömungsbereiches 62 in einem Rohr vorgesehen sind.

Die Strömungsöffnungen 60 können als Schlitze, als Rundlöcher, als Löcher mit elliptischer Kontur, als Löcher mit polygoner Kontur oder als eine Kombination hieraus ausgeführt sein. Auch kann die Größe der Löcher variieren.

In der dritten Ausführungsform erstrecken sich die Strömungsbereiche 62 in Hochrichtung H und zwar von oberhalb der Folienlaufbahn F bis unterhalb der Folienlaufbahn F, sodass sich Strömungsöffnungen 60 sowohl oberhalb, unterhalb als auch in gleicher Höhe mit der Folienlaufbahn F befinden.

In Querrichtung Q sind die Strömungsbereiche 62 neben der Folienlaufbahn F angeordnet.

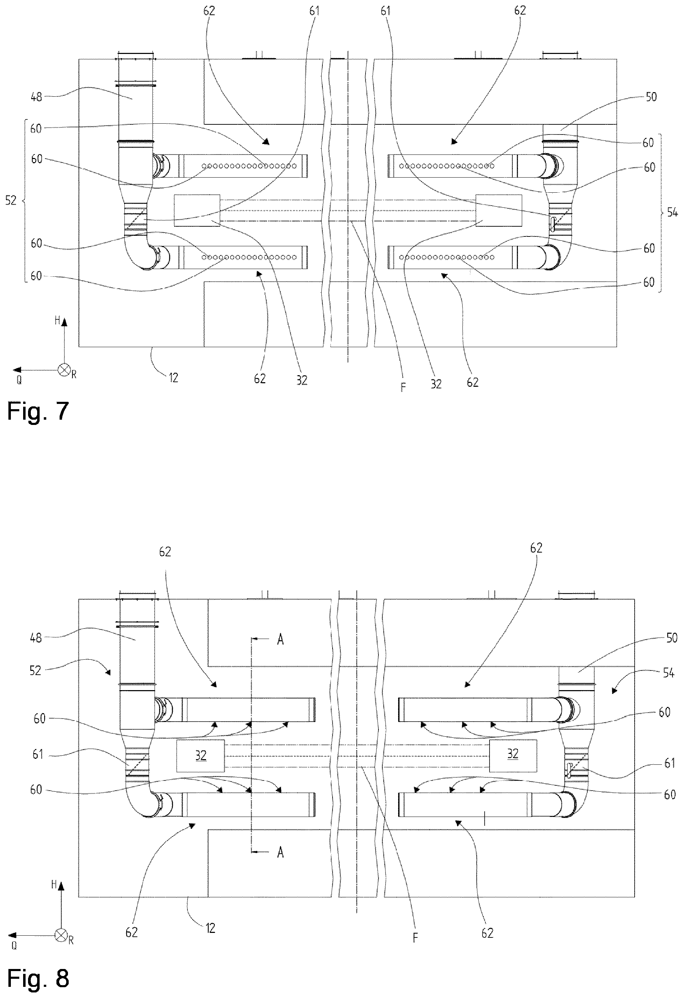

In der vierten Ausführungsform gemäß Figur 7 sind ebenfalls Strömungsbereiche 62 wie in der dritten Ausführungsform gemäß Figur 6 vorgesehen.

Im Unterschied zur dritten Ausführungsform sind mehrere Strömungsbereiche 62 je Ausgleichsöffnung 52, 54 vorgesehen und die Strömungsbereiche 62 erstrecken sich in der vierten Ausführungsform gemäß Figur 7 in Querrichtung Q.

Genauer gesagt sind jeweils zwei Strömungsbereiche 62 für jede Ausgleichsöffnung 52, 54 vorgesehen, wobei sich ein Strömungsbereich 62 jeder Ausgleichsöffnung 52, 54 oberhalb der Folienlaufbahn F und der andere unterhalb der Folienlaufbahn F erstreckt.

In Querrichtung Q erstrecken sich die Strömungsbereiche 62 zur Mittelebene M hin, ohne sie zu kreuzen.

Beispielsweise erstrecken sich alle Strömungsbereiche 62 in Querrichtung Q entlang der Transportschienen 32 und teilweise entlang der Folienlaufbahn F. Die Strömungsbereiche 62 können in Querrichtung Q somit zum Teil über das Transportsystem 32 und über die Folie hinaus ragen.

Die Strömungsöffnungen 60 sind in und/oder entgegen der Abzugsrichtung R geöffnet.

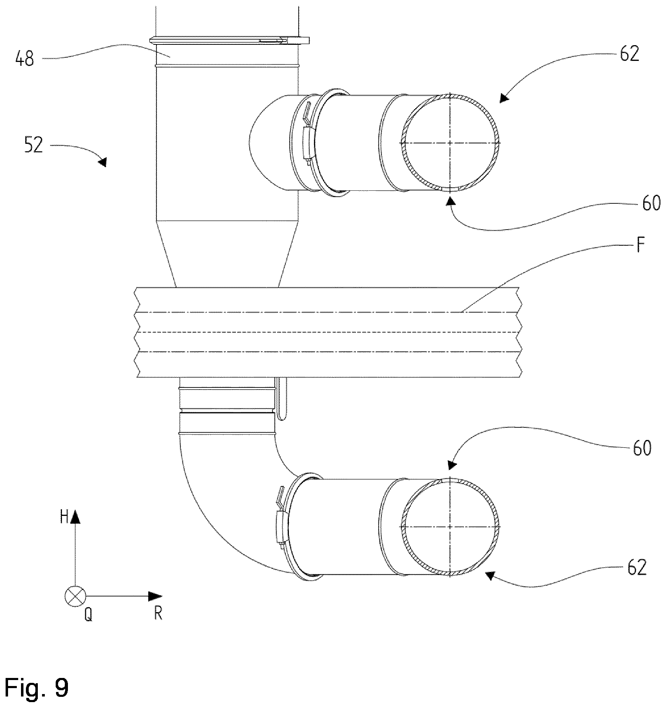

In den Figuren 8 und 9 ist eine fünfte erfindungsgemäße Ausführungsform der Reckanlage 10 dargestellt. Die fünfte Ausführungsform entspricht im Wesentlichen der vierten Ausführungsform nach Figur 7.

In Unterschied zur vierten Ausführungsform sind die Strömungsöffnungen 60 in bzw. entgegen der Hochrichtung H geöffnet.

Wie gut in Figur 9 zu erkennen, sind die Strömungsöffnungen 60 zur Folienlaufbahn F hin ausgerichtet.

Die Strömungsöffnungen 60 der Strömungsbereiche 62, die sich unterhalb der Folienlaufbahn F erstrecken, sind an der Oberseite des entsprechenden Rohres ausgebildet. In analoger Weise sind die Strömungsöffnungen 60 der Strömungsbereiche 62, die sich oberhalb der Folienlaufbahn F erstrecken, an der Unterseite des entsprechenden Rohres ausgebildet.

Die aus den Strömungsöffnungen 60 austretenden Luftströmungen verlaufen somit in bzw. gegen die Hochrichtung H und jeweils im Wesentlichen senkrecht auf die Folienlaufbahn F zu.

Durch die Strömungsbereiche 62 der dritten, vierten und fünften Ausführungsform werden Wechselwirkungen mit der Folie noch weiter verringert.

## Patentansprüche

1. Reckanlage (10) zum Recken einer Folie, insbesondere eine Quer-, Längs- und/oder Simultan-Reckanlage, mit einem Ofen (12) und einer Ausgleichsvorrichtung (16),
wobei der Ofen (12) eine Hochrichtung (H), eine Querrichtung (Q) und eine Abzugsrichtung (R) aufweist,
**dadurch gekennzeichnet, dass** die Ausgleichsvorrichtung (16) einen Luftförderer (42), eine erste Ausgleichsöffnung (52) und eine zweite Ausgleichsöffnung (54) aufweist, wobei die erste Ausgleichsöffnung (52) und die zweite Ausgleichsöffnung (54) auf entgegengesetzten Seiten einer Mittelebene (M) des Ofens (12) in Hoch- und Abzugsrichtung (H, R) in den Ofen (12) münden,
dass der Luftförderer (42) strömungstechnisch zwischen der ersten Ausgleichsöffnung (52) und der zweiten Ausgleichsöffnung (54) angeordnet ist,
dass die Ausgleichsvorrichtung (16) dazu ausgebildet ist, eine Menge an Luft durch eine der Ausgleichsöffnungen (52, 54) aus dem Ofen (12) zu entnehmen und die entnommene Menge an Luft dem Ofen (12) durch die andere der Ausgleichsöffnungen (54, 52) zuzuführen.

2. Reckanlage nach Anspruch 1, **dadurch gekennzeichnet, dass** die erste Ausgleichsöffnung (52) und die zweite Ausgleichsöffnung (54) gleich ausgebildet sind.

3. Reckanlage nach Anspruch 1 oder 2, **dadurch gekennzeichnet, dass** die erste Ausgleichsöffnung (52) und die zweite Ausgleichsöffnung (54) im Wesentlichen an gleicher Position in Abzugsrichtung (R) angeordnet sind.

4. Reckanlage nach einem der vorhergehenden Ansprüche, **dadurch gekennzeichnet, dass** die erste Ausgleichsöffnung (52) und die zweite Ausgleichsöffnung (54) im Bereich eines Folieneinlaufs in den Ofen (12) oder im Bereich eines Folienauslaufs aus dem Ofen (12) angeordnet sind.

5. Reckanlage nach einem der vorhergehenden Ansprüche, **dadurch gekennzeichnet, dass** die erste Ausgleichsöffnung (52) und die zweite Ausgleichsöffnung (54) im Bereich einer Neutralzone (28) des Ofens (12), einer Zone (26) des Ofens (12) vor einer Neutralzone (28) und/oder einer Zone (30) des Ofens (12) nach einer Neutralzone (28) angeordnet sind.

6. Reckanlage nach einem der vorhergehenden Ansprüche, **dadurch gekennzeichnet, dass** im Ofen (12) eine Folienlaufbahn (F) definiert ist, insbesondere wobei die erste Ausgleichsöffnung (52) und die zweite Ausgleichsöffnung (54) bezüglich der Querrichtung (Q) außerhalb der Folienlaufbahn (F) angeordnet sind und/oder bezüglich der Hochrichtung (H) auf Höhe der Folienlaufbahn (F) angeordnet sind.

7. Reckanlage nach Anspruch 6, **dadurch gekennzeichnet, dass** die erste Ausgleichsöffnung (52) und die zweite Ausgleichsöffnung (54) jeweils zwei Strömungsöffnungen (60) aufweisen, wobei jeweils eine der beiden Strömungsöffnungen (60) oberhalb und die andere der beiden Strömungsöffnungen (60) unterhalb der Folienlaufbahn (F) angeordnet ist.

8. Reckanlage nach Anspruch 6, **dadurch gekennzeichnet, dass** die erste Ausgleichsöffnung (52) und die zweite Ausgleichsöffnung (54) jeweils eine Vielzahl an Strömungsöffnungen (60) in wenigstens einem Strömungsbereich (62) aufweisen,
wobei sich der Strömungsbereich (62) in Hochrichtung (H) erstreckt, insbesondere von unterhalb der Folienlaufbahn (F) bis oberhalb der Folienlaufbahn (F), oder
wobei sich der Strömungsbereich (62) in Querrichtung (Q) oberhalb oder unterhalb der Folienlaufbahn (F) erstreckt.

9. Reckanlage nach einem der vorhergehenden Ansprüche, **dadurch gekennzeichnet, dass** der Luftförderer (42) außerhalb des Behandlungsraums (12) angeordnet ist und/oder dass der Luftförderer (42) ein Radialventilator ist.

10. Reckanlage nach einem der vorhergehenden Ansprüche, **dadurch gekennzeichnet, dass** die erste Ausgleichsöffnung (52) durch eine erste Rohrleitung (48) und die zweite Ausgleichsöffnung (54) durch eine zweite Rohrleitung (50) strömungstechnisch mit dem Luftförderer (42) verbunden ist.

11. Reckanlage nach Anspruch 10, **dadurch gekennzeichnet, dass** die Ausgleichsvorrichtung (16) einen ersten Klappkasten (44), der mit der Druckseite des Luftförderers (42) strömungstechnisch verbunden ist, und einen zweiten Klappkasten (46) aufweist, der mit der Saugseite des Luftförderers (42) strömungstechnisch verbunden ist,
wobei sich die erste Rohrleitung (48) und die zweite Rohrleitung (50) jeweils in zwei Zweige (56, 58) verzweigen und je ein Zweig (56) mit dem ersten Klappkasten (44) und der jeweils andere Zweig (58) mit dem zweiten Klappkasten (46) strömungstechnisch verbunden ist.

12. Reckanlage nach Anspruch 11, **dadurch gekennzeichnet, dass** in einer ersten Stellung der Klappkästen (44, 46) die erste Rohrleitung (48) strömungstechnisch mit der Saugseite des Luftförderers (42) verbunden ist und die zweite Rohrleitung (50) strömungstechnisch mit der Druckseite des Luftförderers (42) verbunden ist, und in einer zweiten Stellung der Klappkästen (44, 46) die erste Rohrleitung (48) strömungstechnisch mit der Druckseite des Luftförderers (42) verbunden ist und die zweite Rohrleitung (50) strömungstechnisch mit der Saugseite des Luftförderers (42) verbunden ist.

13. Reckanlage nach einem der vorhergehenden Ansprüche, **dadurch gekennzeichnet, dass** die Reckanlage (10) einen Sensor (40) für die Richtung einer Luftströmung (L) und/oder einen Drucksensor aufweist.

14. Reckanlage nach einem der vorhergehenden Ansprüche, **dadurch gekennzeichnet, dass** die Reckanlage ein Transportsystem (14) aufweist, das dazu ausgebildet ist, die Folie durch den Ofen (12) in Abzugsrichtung (R) zu transportieren, insbesondere entlang der Folienlaufbahn (F).

15. Verfahren zur Verringerung ungleichmäßiger Temperaturen und Luftströmungen in einer Reckanlage (10), mit den folgenden Schritten:
- Messen der Größe der Luftströmung (L) in Abzugsrichtung (R) und/oder des Drucks auf einer Seite der Mittelebene (M) des Ofens (12) der Reckanlage (10), und
- **gekennzeichnet durch** Entnehmen, mittels einer Ausgleichsvorrichtung (16), einer Menge an Luft durch eine erste Ausgleichsöffnung (52) auf einer Seite der Mittelebene (M) des Ofens (12) aus dem Ofen (12) und Zuführen der entnommenen Menge an Luft auf der anderen Seite der Mittelebene (M) zu dem Ofen (12) durch eine zweite Ausgleichsöffnung (54) in Abhängigkeit des Ergebnisses der Messung.

## Claims

1. Stretching unit (10) for stretching a film, in particular a transverse direction orienter, a machine direction orienter and/or simultaneous stretching unit, comprising an oven (12) and a compensation device (16),
wherein the oven (12) comprises a vertical direction (H), a transverse direction (Q) and a drawing direction (R),
**characterized in that** the compensation device (16) comprises an air conveyor (42), a first compensation opening (52) and a second compensation opening (54), wherein the first compensation opening (52) and the second compensation opening (54) open into the oven (12) on opposing sides of a central plane (M) of the oven (12) in the vertical and drawing directions (H, R),
**in that** the air conveyor (42) is located in terms of flow between the first compensation opening (52) and the second compensation opening (54),
**in that** the compensation device (16) is configured to remove a volume of air from the oven (12) through one of the compensation openings (52, 54) and to feed the removed volume of air into the oven (12) through the other one of the compensation openings (54, 52).

2. Stretching unit according to claim 1, **characterized in that** the first compensation opening (52) and the second compensation opening (54) are designed identically.

3. Stretching unit according to claim 1 or 2, **characterized in that** the first compensation opening (52) and the second compensation opening (54) are located substantially at the same position in the drawing direction (R).

4. Stretching unit according to any of the preceding claims, **characterized in that** the first compensation opening (52) and the second compensation opening (54) are located in the region of a film infeed into the oven (12) or in the region of a film outfeed out of the oven (12).

5. Stretching unit according to any of the preceding claims, **characterized in that** the first compensation opening (52) and the second compensation opening (54) are located in the region of a neutral zone (28) of the oven (12), a zone (26) of the oven (12) before a neutral zone (28) and/or a zone (30) of the oven (12) after a neutral zone (28).

6. Stretching unit according to any of the preceding claims, **characterized in that** a film track (F) is defined in the oven (12), in particular wherein the first compensation opening (52) and the second compensation opening (54) are located in respect to the transverse direction (Q) outside the film track (F) and/or are located in respect to the vertical direction (H) at the height of the film track (F).

7. Stretching unit according to claim 6, **characterized in that** the first compensation opening (52) and the second compensation opening (54) each comprise two flow openings (60), wherein in each case one of the two flow openings (60) is located above and the other one of the two flow openings (60) is located below the film track (F).

8. Stretching unit according to claim 6, **characterized in that** the first compensation opening (52) and the second compensation opening (54) each comprise a plurality of flow openings (60) in at least one flow region (62),
wherein the flow region (62) extends in the vertical direction (H), in particular, from below the film track (F) to above the film track (F), or
wherein the flow region (62) extends in the transverse direction (Q) above or below the film track (F).

9. Stretching unit according to any one of the preceding claims, **characterized in that** the air conveyor (42) is located outside the treatment space (12) and/or that the air conveyor (42) is a radial fan.

10. Stretching unit according to any of the preceding claims, **characterized in that** the first compensation opening (52) is flow-connected to the air conveyor (42) via a first pipe (48) and the second compensation opening (54) is flow-connected to the air conveyor (42) via a second pipe (50).

11. Stretching unit according to claim 10, **characterized in that** the compensation device (16) comprises a first hinged box (44) that is flow-connected to the outlet side of the air conveyor (42) and a second hinged box (46) that is flow-connected to the intake side of the air conveyor (42),
wherein the first pipe (48) and the second pipe (50) each branch into two branches (56, 58) and in each case one branch (56) is flow-connected to the first hinged box (44) and the corresponding other branch (58) to the second hinged box (46).

12. Stretching unit according to claim 11, **characterized in that** in a first position of the hinged boxes (44, 46), the first pipe (48) is flow-connected to the intake side of the air conveyor (42) and the second pipe (50) is flow-connected to the outlet side of the air conveyor (42), and in a second position of the hinged boxes (44, 46), the first pipe (48) is flow-connected to the outlet side of the air conveyor (42) and the second pipe (50) is flow-connected to the intake side of the air conveyor (42).

13. Stretching unit according to any of the preceding claims, **characterized in that** stretching unit (10) comprises a sensor (40) for the direction of an air flow (L) and/or a pressure sensor.

14. Stretching unit according to any of the preceding claims, **characterized in that** the stretching unit comprises a transport system (14) that is configured to transport a film through the oven (12) in the drawing direction (R), in particular along the film track (F).

15. Method for reducing non-uniform temperatures and air flows in a stretching unit (10), comprising the following steps:
- measurement of the magnitude of the air flow (L) in the drawing direction (R) and/or the pressure on a side of the central plane (M) of the oven (12) of the stretching unit (10), and
- **characterized by** removal of a volume of air from the oven (12) through a first compensation opening (52) on a side of the central plane (M) of the oven (12) by means of a compensation device (16) and feeding the removed volume of air into the oven (12) on the other side of the central plane (M) through a second compensation opening (54) depending on the results of the measurement.

## Revendications

1. Installation d'étirage (10) pour étirer un film, notamment installation d'étirage transversal, longitudinal et/ou simultané, comportant un four (12) et un dispositif de compensation (16),
ledit four (12) ayant une direction verticale (H), une direction transversale (Q) et une direction de retrait (R) ;
**caractérisée en ce que** le dispositif de compensation (16) présente un dispositif d'apport d'air (42), une première ouverture de compensation (52) et une deuxième ouverture de compensation (54), lesdites première ouverture de compensation (52) et deuxième ouverture de compensation (54) débouchant dans le four (12) sur des côtés opposés d'un plan central (M) du four (12) dans la direction verticale et de retrait (H, R),
**en ce que** le dispositif d'apport d'air (42) est disposé fluidiquement entre la première ouverture de compensation (52) et la deuxième ouverture de compensation (54),
**en ce que** le dispositif de compensation (16) est conçu pour évacuer une quantité d'air du four (12) par l'une des ouvertures de compensation (52, 54) et pour apporter au four (12) ladite quantité d'air évacuée par l'autre des ouvertures de compensation (54, 52).

2. Installation d'étirage selon la revendication 1, **caractérisée en ce que** la première ouverture de compensation (52) et la deuxième ouverture de compensation (54) sont de conception identique.

3. Installation d'étirage selon la revendication 1 ou 2, **caractérisée en ce que** la première ouverture de compensation (52) et la deuxième ouverture de compensation (54) sont disposées essentiellement à la même position dans la direction de retrait (R).

4. Installation d'étirage selon l'une des revendications précédentes, **caractérisée en ce que** la première ouverture de compensation (52) et la deuxième ouverture de compensation (54) sont disposées au niveau d'une entrée de film dans le four (12) ou d'une sortie de film du four (12).

5. Installation d'étirage selon l'une des revendications précédentes, **caractérisée en ce que** la première ouverture de compensation (52) et la deuxième ouverture de compensation (54) sont disposées au niveau d'une zone neutre (28) du four (12), d'une zone (26) du four (12) située en amont d'une zone neutre (28) et/ou d'une zone (30) du four (12) située en aval d'une zone neutre (28).

6. Installation d'étirage selon l'une des revendications précédentes, **caractérisée en ce qu'**une trajectoire de film (F) est définie dans le four (12), la première ouverture de compensation (52) et la deuxième ouverture de compensation (54) étant notamment disposées en dehors de la trajectoire de film (F), eu égard à la direction transversale (Q) et/ou sont disposées à la hauteur de la trajectoire de film (F) eu égard à la direction verticale (H).

7. Installation d'étirage selon la revendication 6, **caractérisée en ce que** la première ouverture de compensation (52) et la deuxième ouverture de compensation (54) présentent chacune deux ouvertures d'écoulement (60), l'une des deux ouvertures d'écoulement (60) étant située au-dessus et l'autre des deux ouvertures d'écoulement (60) au-dessous de la trajectoire de film (F).

8. Installation d'étirage selon la revendication 6, **caractérisée en ce que** la première ouverture de compensation (52) et la deuxième ouverture de compensation (54) présentent chacune une pluralité d'ouvertures d'écoulement (60) dans au moins une région d'écoulement (62),
ladite zone d'écoulement (62) s'étendant dans la direction verticale (H), notamment depuis le dessous de la trajectoire de film (F) jusqu'au-dessus de la trajectoire de film (F), ou
ladite zone d'écoulement (62) s'étendant dans la direction transversale (Q) au-dessus ou au-dessous de la trajectoire de film (F).

9. Installation d'étirage selon l'une des revendications précédentes, **caractérisée en ce que** le dispositif d'apport d'air (42) est disposé en dehors de l'espace de traitement (12) et/ou **en ce que** le dispositif d'apport d'air (42) est un ventilateur radial.

10. Installation d'étirage selon l'une des revendications précédentes, **caractérisée en ce que** la première ouverture de compensation (52) est en communication fluidique avec le dispositif d'apport d'air (42) par une première canalisation (48) et la deuxième ouverture de compensation (54) par une deuxième canalisation (50).

11. Installation d'étirage selon la revendication 10, **caractérisée en ce que** le dispositif de compensation (16) comporte une première boîte à clapet (44) en communication fluidique avec le côté pression du dispositif d'apport d'air (42), et une deuxième boîte à clapet (46) en communication fluidique avec le côté aspiration du dispositif d'apport d'air (42),
la première canalisation (48) et la deuxième canalisation (50) se divisent chacune en deux branches (56, 58) et dans chaque cas une branche (56) est en communication fluidique avec la première boîte à clapet (44) et l'autre branche (58) avec la deuxième boîte à clapet (46).

12. Installation d'étirage selon la revendication 11, **caractérisée en ce que**, dans une première position des boîtes à clapet (44, 46), la première canalisation (48) est en communication fluidique avec le côté aspiration du dispositif d'apport d'air (42) et la deuxième canalisation (50) est en communication fluidique avec le côté pression du dispositif d'apport d'air (42), et dans une deuxième position des boîtes à clapet (44, 46), la première canalisation (48) est en communication fluidique avec le côté pression du dispositif d'apport d'air (42) et la deuxième canalisation (50) est en communication fluidique avec le côté aspiration du dispositif d'apport d'air (42).

13. Installation d'étirage selon l'une des revendications précédentes, **caractérisée en ce que** l'installation d'étirage (10) comporte un capteur (40) permettant de détecter la direction d'un écoulement d'air (L) et/ou un capteur de pression.

14. Installation d'étirage selon l'une des revendications précédentes, **caractérisée en ce que** l'installation d'étirage présente un système de transport (14) conçu pour transporter le film dans le four (12) dans le sens du retrait (R), notamment le long de la trajectoire de film (F).

15. Procédé de réduction des températures et écoulements d'air inégaux dans une installation d'étirage (10), comportant les étapes suivantes :
- mesure de la grandeur de l'écoulement d'air (L) dans le sens de retrait (R) et/ou de la pression d'un côté du plan central (M) du four (12) de l'installation d'étirage (10), et
- **caractérisé par** l'évacuation, au moyen d'un dispositif de compensation (16), d'une quantité d'air du four (12) par une première ouverture de compensation (52) sur un côté du plan central (M) du four (12) et l'apport au four (12) de ladite quantité d'air évacuée, par une deuxième ouverture de compensation (54) de l'autre côté du plan central (M), en fonction du résultat de la mesure.
